# EUROPEAN PATENT APPLICATION

(11) **EP 3 786 467 A1**
(43) Date of publication of application: **03.03.2021**
(21) Application number: 20192671.4
(22) Date of filing: 25.08.2020
(51) Int. Cl.: F16B 37/04

(54) **ERGONOMIC BOX NUT RETAINER**

(30) Priority: 27.08.2019 US 201962892126 P; 21.08.2020 US 202017000104
(71) Applicant: Illinois Tool Works INC., Glenview, IL 60025 (US)
(72) Inventor: BUCZYNSKI, Gregory George, Illinois, 60025 (US)
(74) Representative: HGF

(57) **Abstract**

A first example box nut retainer includes a support (102), a fastener sleeve (106), a first wing (108), and a second wing (110). The support has a base (120) and a tab (122,124,126,128) extending from the base. The fastener sleeve defines an opening and extends downwardly from the base. The first wing extends from the base and has a snap arm (144). The second wing extends from the base and overlaps the first wing.

## Description

### RELATED APPLICATIONS

The present application claims priority to U.S. Provisional Application Serial No. 62/892,126 filed on August 27, 2019, which is incorporated by reference in its entirety herein.

### FIELD OF THE DISCLOSURE

Embodiments of the present disclosure generally relate to a fastening system, and, more particularly, to an ergonomic box nut retainer system that is configured to securely connect multiple components together.

### BACKGROUND

In recent years, retainers have been developed to fasten panels to one another. For example, vehicles include various panels (e.g., sheet metal or polymer) connected to one another to form the body, doors, and interior of the vehicle.

Certain known retainers are configured to fit into an opening defined in a panel. When a fastener is threaded into the retainer, the retainer expands to retainingly engage the panel.

However, these known retainers have high insertion forces and are thus often difficult for operators to install the known retainers in panels. Improper installation of the known retainers may lead to loss of the retainer, misalignment of the fastener in the retainer, rattling noises, and/or wear to the panel.

Therefore, a need exists for a box nut that is ergonomic for operators to install and remains securely fixed in panels.

### SUMMARY

In one aspect, an example box nut retainer is disclosed that includes a support, a fastener sleeve, a first wing, and a second wing. The support has a base and a tab extending from the base. The fastener sleeve defines an opening and extends downwardly from the base. The first wing extends from the base and has a snap arm. The second wing extends from the base and overlaps the first wing.

In another aspect, an example box nut retainer is disclosed that includes a support, a fastener sleeve, and a plurality of wings. The fastener sleeve defines an opening and extends downwardly from the support. The plurality of wings extends downwardly from the support. A subset of the plurality of wings each has a snap arm.

In a further aspect, an example box nut retainer is disclosed that includes a support, a first wing, and a second wing. The support has a base and a plurality of tabs extending from the base in an X-shape. The base defines an opening. The first wing extends from the base and has a snap arm. The second wing extends from the base and overlaps the first wing.

### BRIEF DESCRIPTION OF THE DRAWINGS

FIG. 1 is an isometric view of a first example box nut retainer according to an embodiment of the present disclosure;
FIG. 2 is an isometric view of the first example box nut retainer of FIG. 1 installed in a panel;
FIG. 3 is another isometric view of the first example box nut retainer of FIGS. 1 and 2 installed in the panel of FIG. 2;
FIG. 4 is an isometric view of a first example assembly including the first example box nut retainer of FIGS. 1-3 installed in the panel of FIGS. 2 and 3 and utilized with a fastener;
FIG. 5 is a side view of the first example assembly of FIG. 4;
FIG. 6 is another side view of the first example assembly of FIGS. 4 and 5;
FIG. 7 is an isometric view of the first example assembly of FIGS. 4-6;
FIG. 8 is a top view of the first example assembly of FIGS. 4-7;
FIG. 9 is a bottom view of the first example assembly of FIGS. 4-8; and
FIG. 10 is a cross-sectional view of the first example assembly of FIGS. 4-9 taken along line 10-10 of FIG. 9.

Before the embodiments of the disclosure are explained in detail, it is to be understood that the disclosure is not limited in its application to the details of construction and the arrangement of the components set forth in the following description or illustrated in the drawings. The disclosure is capable of other embodiments and of being practiced or being carried out in various ways. Also, it is to be understood that the phraseology and terminology used herein are for the purpose of description and should not be regarded as limiting. The use of "including" and "comprising" and variations thereof is meant to encompass the items listed thereafter and equivalents thereof as well as additional items and equivalents thereof.

### DETAILED DESCRIPTION

Embodiments of the present disclosure provide an ergonomic box nut retainer with features that facilitate operators in installing the box nut retainer into a panel and securely fixing the box nut retainer in the panel.

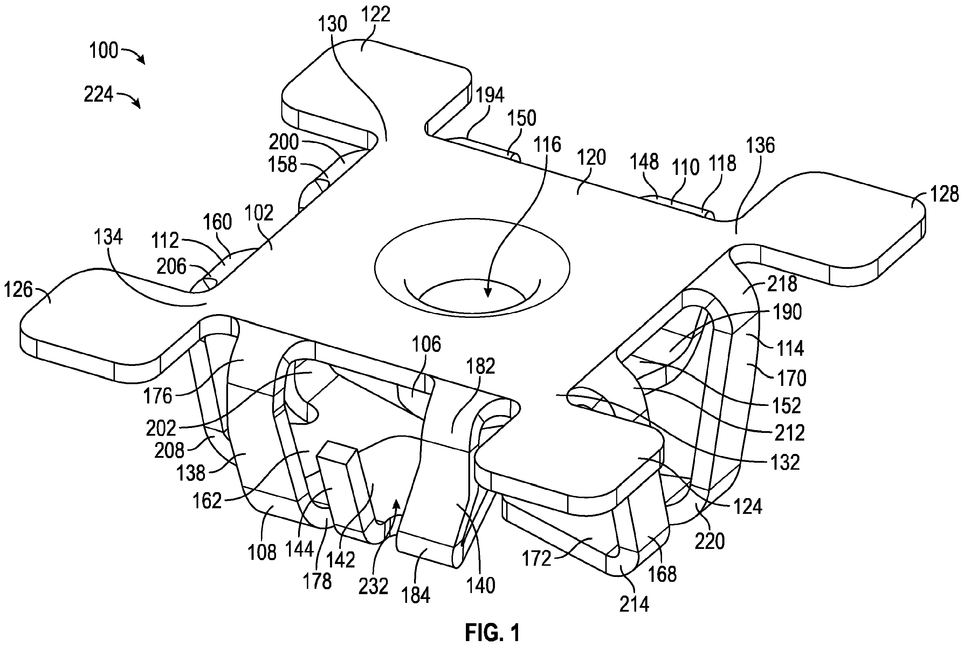

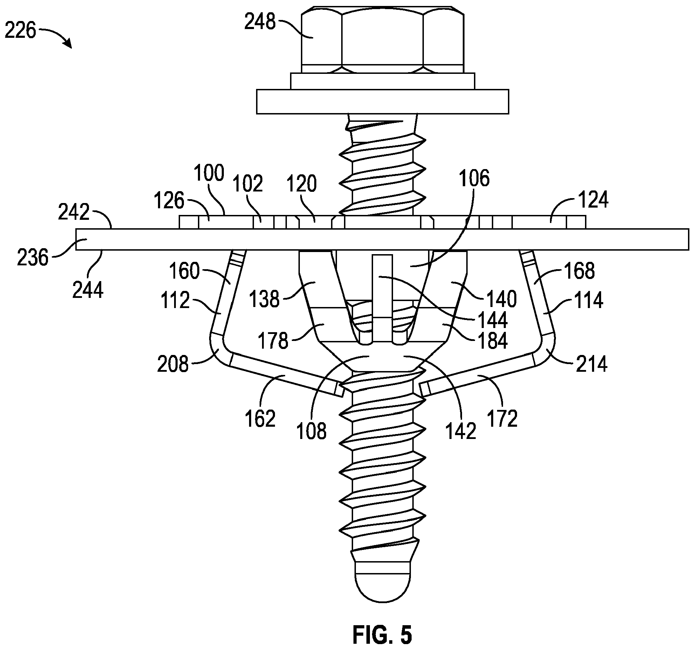

A first example box nut retainer 100 according to an embodiment of the present disclosure is depicted in FIGS. 1-10. The box nut retainer 100 includes a support 102. With reference to FIGS. 1-4 and 7-9, the box nut retainer 100 further includes a fastener sleeve 106, a first wing 108, a second wing 110, a third wing 112, and a fourth wing 114. The first wing 108 is opposite the second wing 110. The third wing 112 is opposite the fourth wing 114. The first wing 108 is adjacent the third wing 112 and the fourth wing 114. The second wing 110 is adjacent the third wing 112 and the fourth wing 114. The first wing 108, the second wing 110, the third wing 112, and the fourth wing 114 are L-shaped. The first wing 108 and the second wing 110 are substantially identical. The third wing 112 and the fourth wing 114 are substantially identical.

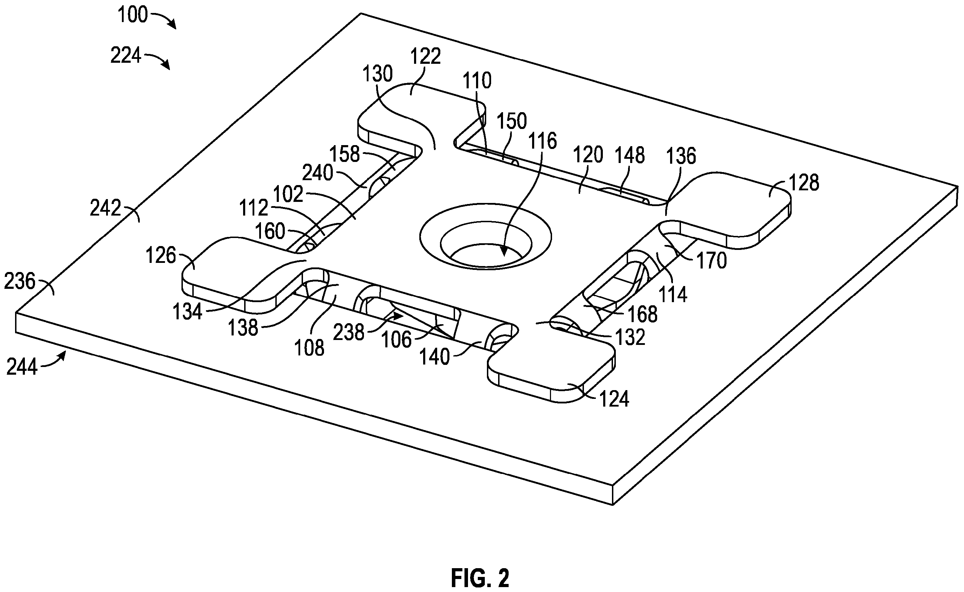

With reference to FIGS. 1-3 and 10, the support 102 and the fastener sleeve 106 define an opening 116. More specifically, the fastener sleeve 106 extends downwardly from the support 102 to define the opening 116. The opening 116 extends through the support 102. The fastener sleeve 106 is centrally positioned relative to the support 102. With reference to FIGS. 1, 2, and 8, the support 102 includes a base 120, a first tab 122, a second tab 124, a third tab 126, and a fourth tab 128. The first tab 122 is opposite the second tab 124. The third tab 126 is opposite the fourth tab 128. The first tab 122 is adjacent to the third tab 126 and the fourth tab 128. The second tab 124 is adjacent to the third tab 126 and the fourth tab 128. Thus, the support 102 is generally X-shaped. With reference to FIGS. 1 and 2, the fastener sleeve 106 is centrally located in the base 120 and interposed between the first, second, third, and fourth tabs 122, 124, 126, 128. The first tab 122 includes and connects to the base 120 via a first neck 130. The second tab 124 includes and connects to the base 120 via a second neck 132. The third tab 126 includes and connects to the base 120 via a third neck 134. The fourth tab 128 includes and connects to the base 120 via a fourth neck 136.

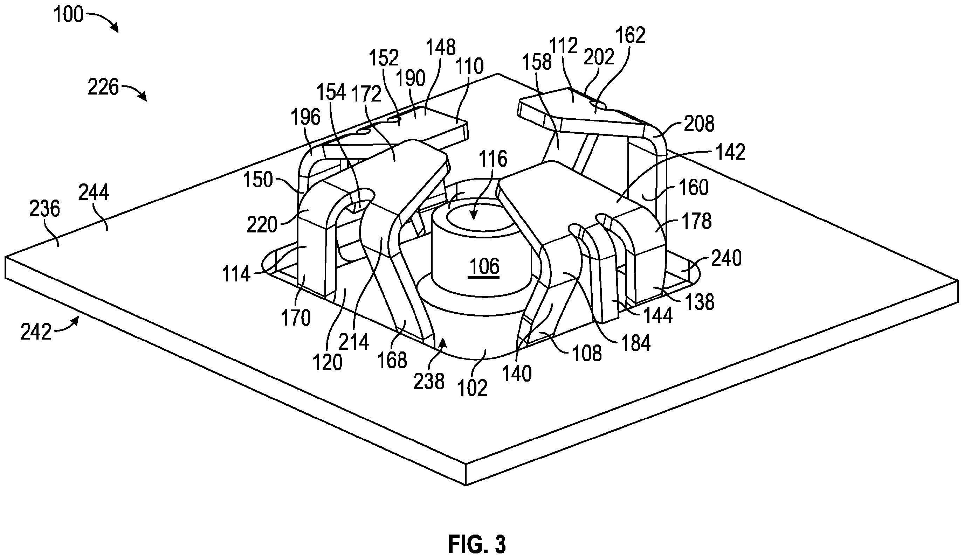

With reference to FIG. 3, the first wing 108 includes a first leg 138, a second leg 140, a first connector 142, and a first snap arm 144. The first connector 142 is connected to the first leg 138 and the second leg 140. The first snap arm 144 extends from the first connector 142 between the first leg 138 and the second leg 140. The first snap arm 144 is L-shaped. The first snap arm 144 extends outwardly and diagonally beyond the first leg 138 and the second leg 140 toward the support 102. With reference to FIG. 1, the first snap arm 144 extends beyond the base 120. The second tab 124 and the third tab 126 extend beyond the first snap arm 144. The first snap arm 144 pivots resiliently relative to the first connector 142.

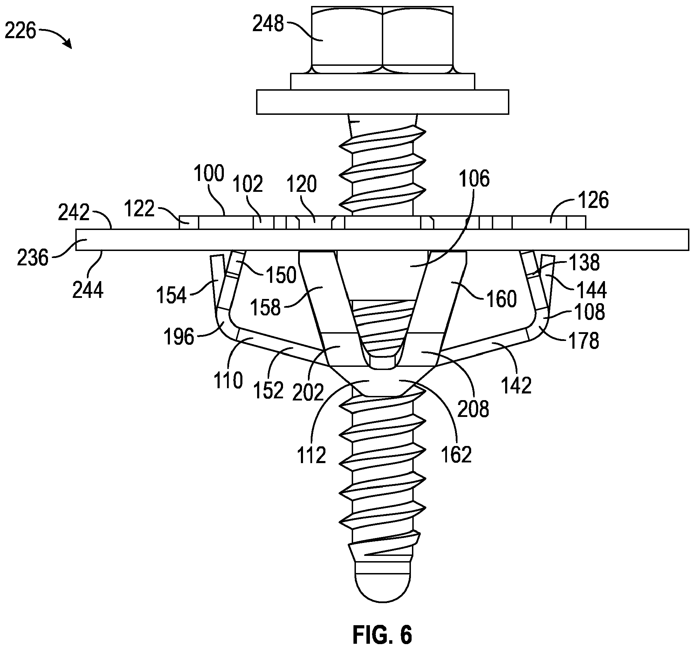

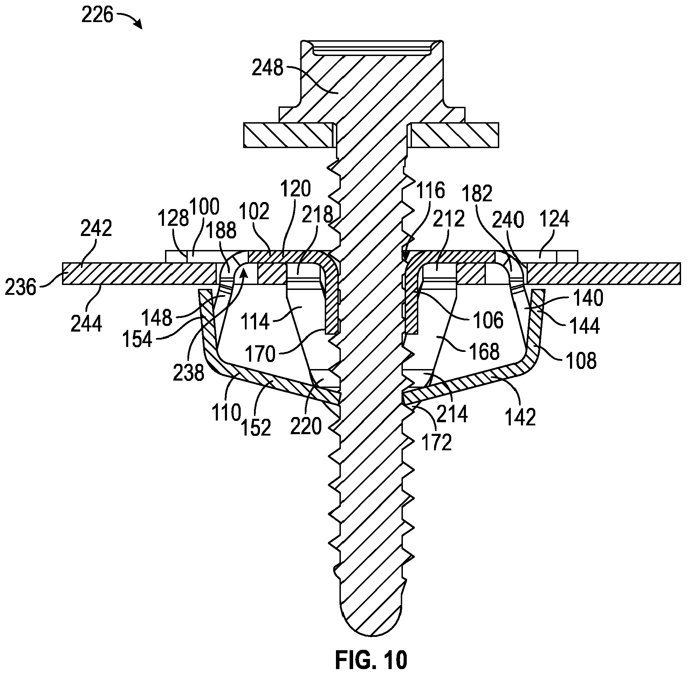

With reference to FIG. 3, the second wing 110 includes a third leg 148, a fourth leg 150, a second connector 152, and a second snap arm 154. The second connector 152 is connected to the third leg 148 and the fourth leg 150. The second snap arm 154 extends from the second connector 152 between the third leg 148 and the fourth leg 150 toward the support 102. In other words, a subset of the first, second, third, and fourth wings 108, 110, 112, 114 has the first and second snap arms 144, 154. The second snap arm 154 is L-shaped. The second snap arm 154 extends outwardly and diagonally beyond the third leg 148 and the fourth leg 150 toward the support 102. The first snap arm 144 and the second snap arm 154 extend oppositely from one another. With reference to FIG. 10, the second snap arm 144 extends beyond the base 120. The fourth tab 128 extends beyond the first snap arm 144. The second snap arm 154 pivots resiliently relative to the second connector 152. With reference to FIG. 6, the first tab 122 extends beyond the second snap arm 154.

With reference to FIG. 3, the third wing 112 includes a fifth leg 158, a sixth leg 160, and a third connector 162. The third connector 162 is connected to the fifth leg 158 and the sixth leg 160.

With reference to FIG. 3, the fourth wing 114 includes a seventh leg 168, an eighth leg 170, and a fourth connector 172. The fourth connector 172 is connected to the seventh leg 168 and the eighth leg 170.

With reference to FIG. 1, the first leg 138 includes a first top corner 176 and a first bottom corner 178. The first leg 138 connects to the base 120 via the first top corner 176. The first leg 138 connects to the first connector 142 via the first bottom corner 178.

With reference to FIG. 1, the second leg 140 includes a second top corner 182 and a second bottom corner 184. The second leg 140 connects to the base 120 via the second top corner 182. The second leg 140 connects to the first connector 142 via the second bottom corner 184.

With reference to FIG. 1, the third leg 148 includes a third top corner 188 and a third bottom corner 190. The third leg 148 connects to the base 120 via the third top corner 188. The third leg 148 connects to the second connector 152 via the third bottom corner 190.

With reference to FIG. 1, the fourth leg 150 includes a fourth top corner 194. The fourth leg 150 connects to the base 120 via the fourth top corner 194. With reference to FIG. 3, the fourth leg 150 also includes a fourth bottom corner 196. The fourth leg 150 connects to the second connector 152 via the fourth bottom corner 196.

With reference to FIG. 1, the fifth leg 158 includes a fifth top corner 200. The fifth leg 158 connects to the base 120 via the fifth top corner 200. With reference to FIG. 3, the fifth leg 158 also includes a fifth bottom corner 202. The fifth leg 158 connects to the third connector 162 via the fifth bottom corner 202.

With reference to FIG. 1, the sixth leg 160 includes a sixth top corner 206 and a sixth bottom corner 208. The sixth leg 160 connects to the base 120 via the sixth top corner 206. The sixth leg 160 connects to the third connector 162 via the sixth bottom corner 208.

With reference to FIG. 1, the seventh leg 168 includes a seventh top corner 212 and a seventh bottom corner 214. The seventh leg 168 connects to the base 120 via the seventh top corner 212. The seventh leg 168 connects to the fourth connector 172 via the seventh bottom corner 214.

With reference to FIG. 1, the eighth leg 170 includes an eighth top corner 218 and an eighth bottom corner 220. The eighth leg 170 connects to the base 120 via the eighth top corner 218. The eighth leg 170 connects to the fourth connector 172 via the eighth bottom corner 220.

With reference to FIGS. 1 and 2, the box nut retainer 100 is shown in a relaxed state 224. With reference to FIGS. 3-10, the box nut retainer 100 is shown in a deployed state 226. With reference to FIG. 1, when the box nut retainer 100 is in the relaxed state 224, the first connector 142 and the second connector 152 are aligned with one another. Additionally, the third connector 162 and the fourth connector 172 are aligned with one another. The third wing 112 overlaps the first wing 108 and the second wing 110 at an overlap region 232. The fourth wing 114 also overlaps the first wing 108 and the second wing 110 at the overlap region 232. With reference to FIG. 1, the overlap region 232 at least partially overshadows the opening 116.

With reference to FIGS. 2-10, the first example box nut retainer 100 is installed in a panel 236. With reference to FIGS. 2-4, and 7-10, the panel 236 defines an aperture 238. With reference to FIGS. 2, 3, 7, and 10, the panel 236 includes walls 240, a top surface 242, and a bottom surface. More specifically, the walls 240 define the aperture 238. The aperture 238 is noncircular (e.g., rectangular, square, polygonal, ovate, etc.).

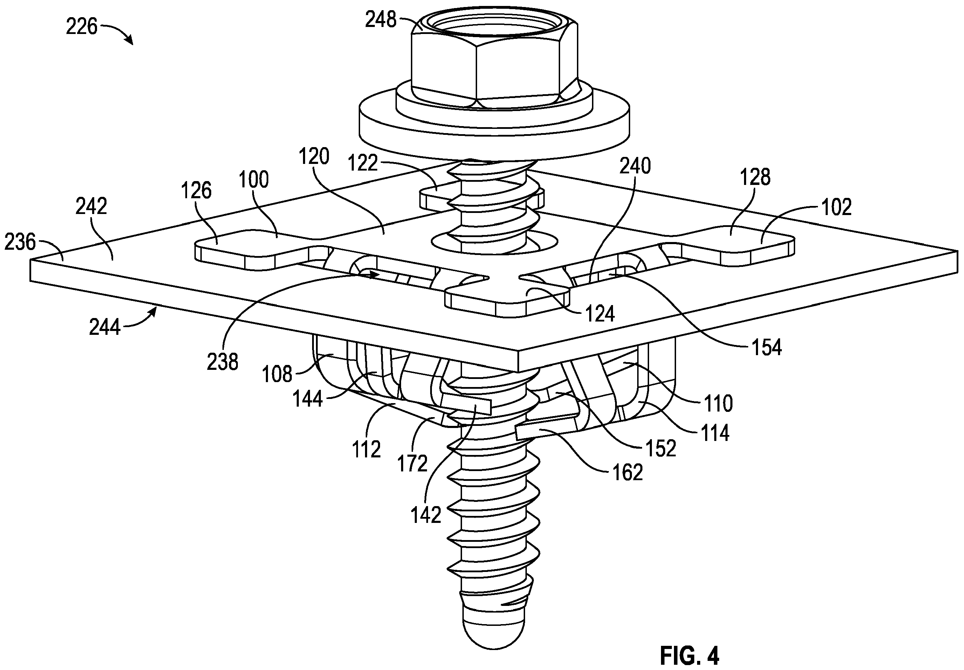

With reference to FIGS. 4-10, the first example box nut retainer 100 is installed in the panel 236 and engaged with a fastener 248 (e.g., a screw or a bolt). The fastener 248 is externally threaded. The fastener sleeve 106 is configured to receive the fastener 248. In some embodiments, the fastener sleeve 106 is internally threaded to guide and/or align the fastener 248 to traverse through the fastener sleeve 106.

With reference to FIGS. 4-10, additionally or alternatively, the fastener sleeve 106 may be configured to accept a specific type of fastener. As but one non-limiting example, the fastener sleeve 106 may be configured to accept M series fasteners. The fastener sleeve 106 may be configured to have an inner diameter compatible with a specific M series fastener. Optionally, the M series screws and/or bolts are based on the International Organization for Standardization (ISO) 965, "ISO General Purpose Metric Screw Thread - Tolerances," the American National Standards Institute B4.2-1978, "Preferred Metric Limits and Fits," the American National Standards Institute B1.13M, "Metric Screw Threads: M Profile," and/or the like. In other examples, the fastener sleeve 106 may be configured to accept non-threaded fasteners (e.g., rivets, barbed push-in fasteners, rods, dowels, etc.).

With reference to FIG. 2, in operation, the first example box nut retainer 100 is introduced into the aperture 238 of the panel 236 via the first wing 108, the second wing 110, the third wing 112, and the fourth wing 114. The support 102 engages the panel 236 via the first tab 122, the second tab 124, the third tab 126, and the fourth tab 128. The support 102 provides a hard stop to prevent the box nut retainer 100 from being pushed completely through the panel 236.

With reference to FIG. 3, it should be understood that, in operation, the first snap arm 144 and the second snap arm 154 deflect inwardly toward the fastener sleeve 106 as the first wing 108 and the second wing 110 are inserted into the aperture 238. Once the first snap arm 144 and the second snap arm 154 clear the bottom surface 244, the first snap arm 144 and the second snap arm 154 resiliently snap outwardly away from fastener sleeve 106. Thus, the first snap arm 144 and the second snap arm 154 prevent the box nut retainer 100 from being pulled out of the aperture 238 of the panel 236. The first snap arm 144 has a spring force relative to the first connector 142. The second snap arm 154 has a spring force relative to the second connector 152. It should be appreciated that the respective spring forces of the first snap arm 144 and the second snap arm 154 may be lower as compared to existing fasteners. Thus, an insertion force to clear the first snap arm 144 and the second snap arm 154 past the bottom surface 244 to install the box nut retainer 100 in the panel 236 may be lower as compared to existing fasteners.

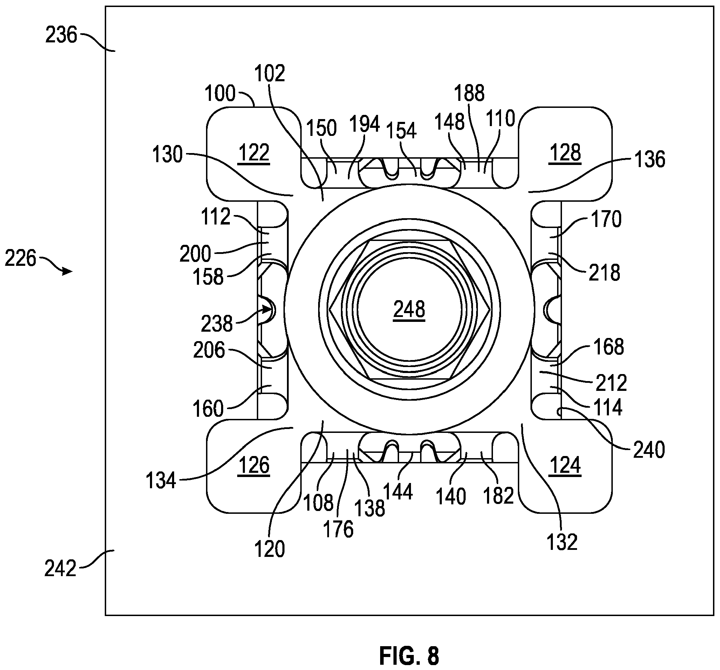

With reference to FIGS. 2, 4, and 8, in operation, the first tab 122, the second tab 124, the third tab 126 and the fourth tab 128 engage the top surface 242 to prevent the box nut retainer 100 from being pushed completely through the aperture 238 of the panel 236. With reference to FIG. 8, in other words, the first tab 122, the second tab 124, the third tab 126, the fourth tab 128, the first snap arm 144, and the second snap arm 154 transversely retain the box nut retainer 100 in the aperture 238 of the panel 236. It should be understood that when the box nut retainer 100 is installed in the panel 236 and in the relaxed state 224, the first tab 122, the second tab 124, the third tab 126, the fourth tab 128, the first snap arm 144, and the second snap arm 154 loosely retain the box nut retainer 100 in the aperture 238 of the panel 236.

With reference to FIG. 3, the first wing 108, the second wing 110, the third wing 112, and the fourth wing 114 engage the walls 240 of the panel 236. With reference to FIG. 2, more specifically, the first top corner 176, the second top corner 182, the third top corner 188, the fourth top corner 194, the fifth top corner 200, the sixth top corner 206, the seventh top corner 212, and the eighth top corner 218 abuttingly engage the walls 240. Thus, the first top corner 176, the second top corner 182, the third top corner 188, the fourth top corner 194, the fifth top corner 200, the sixth top corner 206, the seventh top corner 212, and the eighth top corner 218 prevent the box nut retainer 100 from sliding relative to the panel 236. In other words, the first wing 108, the second wing 110, the third wing 112, and the fourth wing 114 laterally retain the box nut retainer 100 in the aperture 238 of the panel 236.

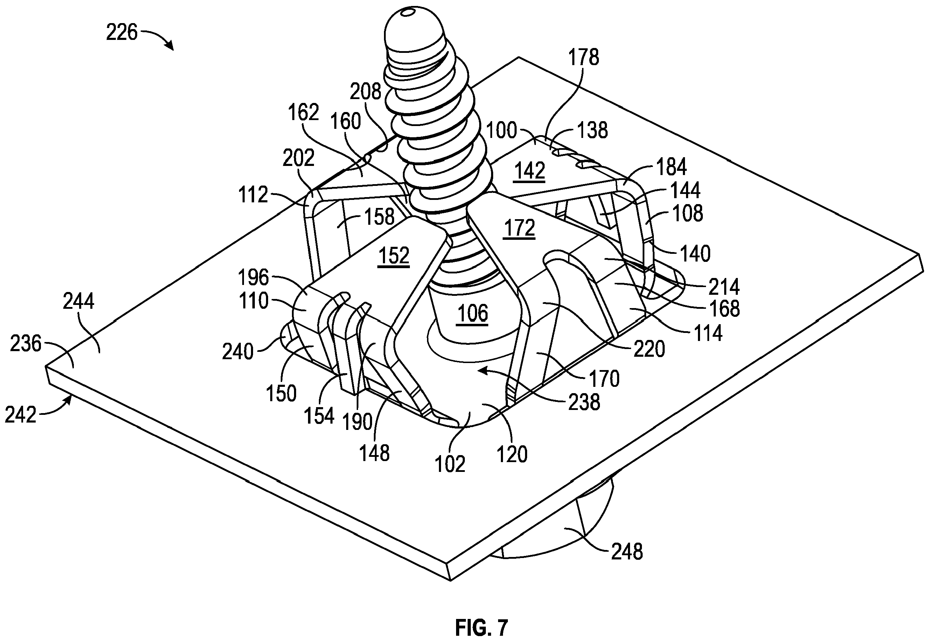

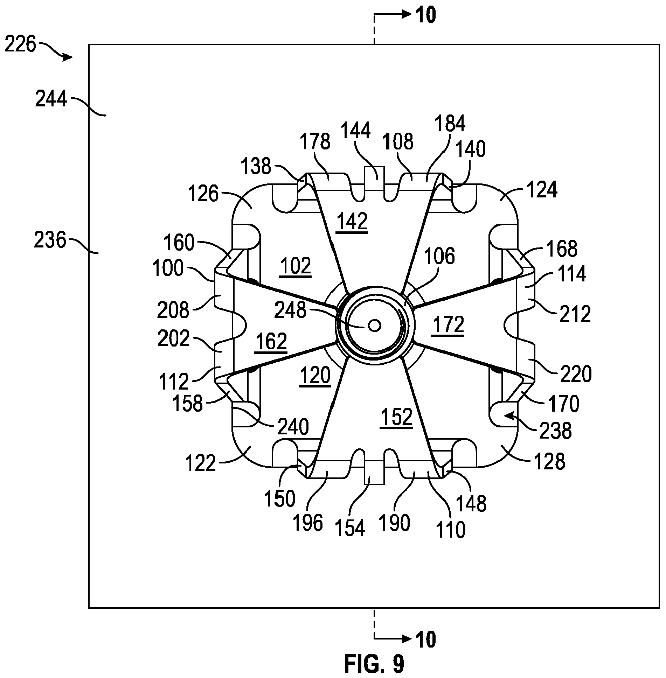

With reference to FIGS. 4, 7, and 9, further in operation, as the fastener 248 is threaded into the fastener sleeve 106, the fastener 248 initially contacts the first wing 108 and the second wing 110 and subsequently contacts the third wing 112 and the fourth wing 114. As the fastener 248 is threadingly driven against the first wing 108, the second wing 110, the third wing 112, and the fourth wing 114, the first wing 108, the second wing 110, the third wing 112, and the fourth wing 114 pivot relative to the support 102 to deflect outwardly away from the fastener sleeve 106 into the deployed state 226. With reference to FIG. 8, more specifically, the first leg 138, the second leg 140, the third leg 148, the fourth leg 150, the fifth leg 158, the sixth leg 160, the seventh leg 168, and the eighth leg 170 respectively bend at the first top corner 176, the second top corner 182, the third top corner 188, the fourth top corner 194, the fifth top corner 200, the sixth top corner 206, the seventh top corner 212, and the eighth top corner 218. Thus, with reference to FIGS. 7 and 9, when the box nut retainer 100 is in the deployed state 226, the first leg 138, the second leg 140, the third leg 148, the fourth leg 150, the fifth leg 158, the sixth leg 160, the seventh leg 168, and the eighth leg 170 contact the walls 240 and the bottom surface 244. With reference to FIG. 9, in other words, as the first wing 108, the second wing 110, the third wing 112, and the fourth wing 114 deploy under pressure applied by the fastener 248, the first leg 138, the second leg 140, the third leg 148, the fourth leg 150, the fifth leg 158, the sixth leg 160, the seventh leg 168, and the eighth leg 170 are driven against the walls 240 and the bottom surface 244 to draw the first tab 122, the second tab 124, the third tab 126, and the fourth tab 128 against the top surface 242 (shown in FIGS. 7 and 8). Thus, when the box nut retainer 100 is installed in the panel 236 and in the deployed state 226, the first tab 122, the second tab 124, the third tab 126, the fourth tab 128, the first wing 108, the second wing 110, the third wing 112, and the fourth wing 114 tightly retain the box nut retainer 100 in the aperture 238 of the panel 236. In other words, when the box nut retainer 100 is installed in the panel 236 and in the deployed state 226, the panel 236 is clamped between the support 102 and the first, second, third, and fourth wings 108, 110, 112, 114.

With reference to FIGS. 4-10, it should be understood that additional components (e.g., a second panel, a wiring harness, a brake line router, etc.) (not shown) may be used with the fastener 248. The fastener 248 may be driven into the box nut retainer 100 to robustly attach the additional components to the panel 236.

As used herein, panel may refer to any component that may be attached or assembled to another component. Any of the panels described herein may be made of any suitable material, for example, a metal or plastic material.

Embodiments of the present disclosure provide a fastening system, and, more particularly, a box nut retainer system that is configured to securely connect multiple components together and to be ergonomic for an operator to install in the components. The box nut retainer system includes a plurality of wings, a subset of which have snap arms, which provide a relatively low insertion force to mount the box nut retainer system into a panel prior to engagement of a fastener therewith and prevent disengagement of the box nut retainer system.

From the foregoing, it will be appreciated that the above example box nut retainer 100 adapts to clampingly engage top and bottom surfaces of substrate panels. Additionally, because the box nut retainer 100 has resilient snap arms that have relatively low spring forces, the insertion force to install the box nut retainer 100 is relatively low. Thus, the box nut retainer 100 may be easier for an operator to install in substrate panels, which may prevent assembly line stoppages and/or improve manufacturing efficiency. Moreover, because the box nut retainer 100 has multiple clamping wings, the box nut retainer 100 fixes securely to substrate panels, which may prevent loss of the box nut retainer 100 and/or wear to the substrate panels. Thus, the above-disclosed box nut retainer 100 conserves resources and may improve manufacturing efficiency as compared to existing fasteners.

While various spatial and directional terms, such as top, bottom, lower, mid, lateral, horizontal, vertical, front and the like may be used to describe embodiments of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Variations and modifications of the foregoing are within the scope of the present disclosure. It is understood that the embodiments disclosed and defined herein extend to all alternative combinations of two or more of the individual features mentioned or evident from the text and/or drawings. All of these different combinations constitute various alternative aspects of the present disclosure. The embodiments described herein explain the best modes known for practicing the disclosure and will enable others skilled in the art to utilize the disclosure. The claims are to be construed to include alternative embodiments to the extent permitted by the prior art.

To the extent used in the appended claims, the terms "including" and "in which" are used as the plain-English equivalents of the respective terms "comprising" and "wherein." Moreover, to the extent used in the following claims, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

Various features of the disclosure are set forth in the appended claims.

Certain embodiments are described in the following numbered clauses:
Clause 1. A box nut retainer, comprising:
   a support having a base and a tab extending from the base;
   a fastener sleeve defining an opening and extending downwardly from the base;
   a first wing extending from the base and having a snap arm; and
   a second wing extending from the base and overlapping the first wing.
Clause 2. The box nut retainer of clause 1, wherein the first wing and the second wing are L-shaped.
Clause 3. The box nut retainer of clause 1, wherein the first wing and the second wing overshadow the opening.
Clause 4. The box nut retainer of clause 1, wherein the fastener sleeve is internally threaded.
Clause 5. The box nut retainer of clause 1, wherein the snap arm extends toward the support.
Clause 6. The box nut retainer of clause 1, wherein the snap arm extends beyond the base.
Clause 7. The box nut retainer of clause 1, wherein the snap arm is L-shaped.
Clause 8. The box nut retainer of clause 1, wherein the snap arm pivots resiliently relative to a connector of the first wing.
Clause 9. The box nut retainer of clause 1, wherein the tab extends beyond the snap arm.
Clause 10. The box nut retainer of clause 1, wherein:
   the tab is a first tab, and
   the support includes a second tab, a third tab, and a fourth tab extending from the base.
Clause 11. The box nut retainer of clause 10, wherein the support is X-shaped.
Clause 12. The box nut retainer of clause 1, wherein the snap arm is a first snap arm and further comprising:
   a third wing extending from the base and having a second snap arm, the second wing overlapping the third wing; and
   a fourth wing extending from the base, the fourth wing overlapping the first wing and the third wing.
Clause 13. The box nut retainer of clause 12, wherein:
   the first wing is opposite the third wing, and
   the second wing is opposite the fourth wing.
Clause 14. The box nut retainer of clause 1, wherein:
   the first wing has a first top corner,
   the second wing has a second top corner,
   the first wing is connected to the base via the first top corner, and
   the second wing is connected to the base via the second top corner.
Clause 15. The box nut retainer of clause 1, wherein the first wing and the second wing are configured to deploy against a bottom surface of a panel to draw the support against a top surface of the panel.
Clause 16. A box nut retainer, comprising:
   a support;
   a fastener sleeve defining an opening and extending downwardly from the support; and
   a plurality of wings extending downwardly from the support, a subset of the plurality of wings each having a snap arm.
Clause 17. The box nut retainer of clause 16, wherein the plurality of wings overshadows the opening.
Clause 18. The box nut retainer of clause 16, wherein the plurality of wings are configured to pivot away from the fastener sleeve and against a bottom surface of a panel to draw the support against a top surface of the panel.
Clause 19. A box nut retainer, comprising:
   a support having a base and a plurality of tabs extending from the base in an X-shape, the base defining an opening;
   a first wing extending from the base and having a snap arm; and
   a second wing extending from the base and overlapping the first wing.
Clause 20. The box nut retainer of clause 19, wherein:
   the snap arm extends beyond the base, and
   the plurality of tabs extend beyond the snap arm.

## Claims

1. A box nut retainer, comprising:
a support having a base and a tab extending from the base;
a fastener sleeve defining an opening and extending downwardly from the base;
a first wing extending from the base and having a snap arm; and
a second wing extending from the base and overlapping the first wing.

2. The box nut retainer of claim 1, wherein the first wing and the second wing are L-shaped.

3. The box nut retainer of claim 1, wherein the first wing and the second wing overshadow the opening.

4. The box nut retainer of claim 1, wherein the fastener sleeve is internally threaded.

5. The box nut retainer of claim 1, wherein the snap arm extends toward the support or beyond the base.

6. The box nut retainer of claim 1, wherein the snap arm is L-shaped.

7. The box nut retainer of claim 1, wherein the snap arm pivots resiliently relative to a connector of the first wing.

8. The box nut retainer of claim 1, wherein the tab extends beyond the snap arm.

9. The box nut retainer of claim 1, wherein:
the tab is a first tab, and
the support includes a second tab, a third tab, and a fourth tab extending from the base, and, optionally, wherein the support is X-shaped.

10. The box nut retainer of claim 1, wherein the snap arm is a first snap arm and further comprising:
a third wing extending from the base and having a second snap arm, the second wing overlapping the third wing; and
a fourth wing extending from the base, the fourth wing overlapping the first wing and the third wing,
and, optionally, wherein:
the first wing is opposite the third wing, and
the second wing is opposite the fourth wing.

11. The box nut retainer of claim 1, wherein:
the first wing has a first top corner,
the second wing has a second top corner,
the first wing is connected to the base via the first top corner, and
the second wing is connected to the base via the second top corner.

12. The box nut retainer of claim 1, wherein the first wing and the second wing are configured to deploy against a bottom surface of a panel to draw the support against a top surface of the panel.

13. A box nut retainer, comprising:
a support;
a fastener sleeve defining an opening and extending downwardly from the support; and
a plurality of wings extending downwardly from the support, a subset of the plurality of wings each having a snap arm.

14. The box nut retainer of claim 13, wherein:
the plurality of wings overshadows the opening; or
the plurality of wings are configured to pivot away from the fastener sleeve and against a bottom surface of a panel to draw the support against a top surface of the panel.

15. A box nut retainer, comprising:
a support having a base and a plurality of tabs extending from the base in an X-shape, the base defining an opening;
a first wing extending from the base and having a snap arm; and
a second wing extending from the base and overlapping the first wing,
and, optionally, wherein:
the snap arm extends beyond the base, and
the plurality of tabs extend beyond the snap arm.
